# EUROPEAN PATENT APPLICATION

(11) **EP 4 768 450 A1**
(43) Date of publication of application: **01.07.2026**
(21) Application number: 25820157.3
(22) Date of filing: 05.06.2025
(51) Int. Cl.: C02F 1/52, H01M 10/54, C02F 1/04, C02F 103/34

(54) **METHOD FOR TREATING CLEANING WASTE LIQUID**

(30) Priority: 05.06.2024 KR 20240074044
(71) Applicant: LG ENERGY SOLUTION, LTD., Seoul 07335 (KR)
(72) Inventor: JANG, Eun Su, Daejeon 34122 (KR); SEONG, Jie Hyun, Daejeon 34122 (KR)
(74) Representative: Hoffmann Eitle
(86) International application number: PCT/KR2025/007721
(87) International publication number: WO 2025/254471

(57) **Abstract**

The present invention relates to a method of treating a cleaning waste liquid which includes a pretreatment step of removing a portion of an organic solvent from a cleaning waste liquid containing a positive electrode active material, a binder, and the organic solvent; a first step of precipitating the binder by adding water to the cleaning waste liquid from which the portion of the organic solvent has been removed; a second step of removing the precipitated binder to obtain a first treatment solution containing the positive electrode active material, the water, and the organic solvent; a third step of separating the positive electrode active material from the first treatment solution to obtain a second treatment solution containing the water and the organic solvent; and a fourth step of removing the water from the second treatment solution and recovering the organic solvent.

## Description

### TECHNICAL FIELD

This application claims priority from Korean Patent Application No. 10-2024-0074044, filed on June 5, 2024, the disclosure of which is incorporated by reference herein.

The present invention relates to a method of treating a cleaning waste liquid generated in a positive electrode material mixer during a battery preparation process.

### BACKGROUND ART

A lithium secondary battery is a secondary battery that is generally composed of a positive electrode including a positive electrode active material, a negative electrode including a negative electrode active material, a separator, and an electrolyte, and is charged and discharged by intercalation-deintercalation of lithium ions. Since lithium secondary batteries have advantages of high energy density, large electromotive force, and high capacity, they are being applied in various fields.

The positive electrode of the lithium secondary battery is prepared by mixing a positive electrode active material, a binder, a conductive agent, and an organic solvent in a positive electrode material mixer to form a positive electrode slurry, coating the positive electrode slurry on a positive electrode collector, and then drying and rolling the coated positive electrode collector. In this case, N-methylpyrrolidone is generally used as the organic solvent.

The positive electrode material mixer used in the preparation of the positive electrode slurry is cleaned with the N-methylpyrrolidone as the solvent of the positive electrode slurry, wherein a cleaning waste liquid discharged after cleaning the positive electrode material mixer contains the positive electrode active material, the binder, the conductive agent, and the N-methylpyrrolidone.

The positive electrode active material includes transition metals, such as nickel, cobalt, and manganese, together with lithium, wherein since the nickel and the cobalt are relatively expensive metals and cobalt is particularly known as a metal whose supply and demand are unstable worldwide due to the limited number of producing countries. Also, the N-methylpyrrolidone used in cleaning the positive electrode material mixer is also an expensive organic solvent.

Thus, in a case in which the positive electrode active material and the N-methylpyrrolidone are recovered from the cleaning waste liquid generated after cleaning the positive electrode material mixer and are recycled as raw materials, price competitiveness may not only be secured, but additional revenue may also be generated.

Conventionally, a method of recovering N-methylpyrrolidone by distilling the cleaning waste liquid of the positive electrode material mixer in a distillation tower was proposed. However, with respect to the above method, there is a problem in that distillation efficiency is reduced and contamination of the distillation tower occurs because distillation temperature is high even under reduced pressure and viscosity of the waste liquid remaining at a lower portion of the distillation tower increases as recovery progresses.

Therefore, there is a need to develop a new method that may effectively treat the cleaning waste liquid of the positive electrode material mixer.

### DISCLOSURE OF THE INVENTION

### TECHNICAL PROBLEM

An aspect of the present invention is to provide a method of treating a cleaning waste liquid of a positive electrode material mixer at a relatively low cost which is environmentally friendly because no toxic gases are generated.

### TECHNICAL SOLUTION

According to an aspect of the present invention, there is provided a method of treating a cleaning waste liquid which includes: a pretreatment step of removing a portion of an organic solvent from a cleaning waste liquid containing a positive electrode active material, a binder, and the organic solvent; a first step of precipitating the binder by adding water to the cleaning waste liquid from which the portion of the organic solvent has been removed; a second step of removing the precipitated binder to obtain a first treatment solution containing the positive electrode active material, the water, and the organic solvent; a third step of separating the positive electrode active material from the first treatment solution to obtain a second treatment solution containing the water and the organic solvent; and a fourth step of removing the water from the second treatment solution and recovering the organic solvent.

In this case, the cleaning waste liquid may be a waste liquid generated after cleaning a positive electrode material mixer, and the organic solvent, for example, may be N-methylpyrrolidone.

The pretreatment step of removing the portion of the organic solvent may be performed by a method of removing a supernatant after precipitating a solid in the cleaning waste liquid or a method of selectively removing only the organic solvent by filtering the cleaning waste liquid.

The pretreatment step is preferably performed such that a solid content in the cleaning waste liquid after the removing of the organic solvent is in a range of 40 wt% to 95 wt%, preferably 60 wt% to 95 wt%, and more preferably 80 wt% to 95 wt%.

In the first step, it is desirable that the water is added in an amount of 0.5 times to 50 times, preferably 0.5 times to 10 times, and more preferably 0.5 times to 2 times a total volume of the cleaning waste liquid.

The second step may be performed by a method of removing binder precipitates that float on an upper surface of the cleaning waste liquid.

Next, in the third step, the separating of the positive electrode active material from the first treatment solution may be performed by a method of precipitating the positive electrode active material in the first treatment solution and performing gravity separation, or a method of filtering the first treatment solution.

If necessary, the method may further include a step of washing and drying the positive electrode active material separated from the first treatment solution, after the third step.

The fourth step may be performed by a method of performing fractional distillation of the second treatment solution.

### ADVANTAGEOUS EFFECTS

Since the method of treating a cleaning waste liquid according to the present invention separates a binder through a crystallization precipitation process rather than a heat treatment, it does not generate toxic hydrogen fluoride gas, and thus, it is environmentally friendly.

Also, in a case in which a pretreatment process of removing at least a portion of an organic solvent from the cleaning waste liquid is performed during the cleaning waste liquid treatment according to the present invention, since reactivity between water and binder is increased, an amount of the water used during precipitation of the binder may be reduced and an amount of energy consumed for distilling the water and the organic solvent during fractional distillation of a second treatment solution may be reduced.

### MODE FOR CARRYING OUT THE INVENTION

Hereinafter, the present invention will be described in more detail.

The method of treating a cleaning waste liquid according to the present invention includes: (1) a pretreatment step of removing at least a portion of an organic solvent from a cleaning waste liquid containing a positive electrode active material, a binder, and the organic solvent, (2) a first step of precipitating the binder by adding water to the cleaning waste liquid, (3) a second step of removing the precipitated binder to obtain a first treatment solution containing the positive electrode active material, the water, and the organic solvent, (4) a third step of separating the positive electrode active material from the first treatment solution to obtain a second treatment solution containing the water and the organic solvent, and (5) a fourth step of removing the water from the second treatment solution and recovering the organic solvent.

### (1) Pretreatment Step

First, a cleaning waste liquid is prepared.

In this case, the cleaning waste liquid may be a waste liquid generated after cleaning a positive electrode material mixer. A positive electrode active material, a binder and/or a conductive agent remain inside the positive electrode material mixer, and when cleaning the positive electrode material mixer, an organic solvent, which may discharge residues in the positive electrode material mixer by slurrying the residues by dissolving the binder, is used as a cleaning solution. For example, N-methylpyrrolidone (NMP), dimethyl sulfoxide (DMSO), or isopropyl alcohol may be used as the cleaning solution of the positive electrode material mixer, and N-methylpyrrolidone may be preferably used.

The cleaning waste liquid generated after cleaning the positive electrode material mixer contains the positive electrode active material, the binder, and the organic solvent used as the cleaning solution, and may optionally contain the conductive agent.

The positive electrode active material may be a positive electrode active material generally used in the art, for example, may include lithium iron phosphate; lithium cobalt-based oxide; lithium manganese-based oxide; lithium nickel-based composite transition metal oxide such as lithium nickel cobalt manganese oxide, lithium nickel cobalt aluminum oxide, and lithium nickel cobalt manganese aluminum oxide, or a combination thereof, and may preferably include lithium nickel-based composite transition metal oxide.

The binder is for binding a positive electrode collector and positive electrode active material particles, wherein it may be various binders commonly used in the art, for example, polyvinylidene fluoride (PVDF), a vinylidene fluoride-hexafluoropropylene copolymer (PVDF-co-HFP), polytetrafluoroethylene (PTFE), polytetrafluoroethylene, polyethylene, polypropylene, an ethylene-propylene-diene monomer rubber (EPDM rubber), a sulfonated-EPDM, or a combination thereof, and may preferably be polyvinylidene fluoride.

In the cleaning waste liquid, the positive electrode active material and the binder may be present in a state of being suspended in the organic solvent, or aggregates of the positive electrode active material and the binder may be present in a state of being precipitated at a lower portion of the cleaning waste liquid.

A pretreatment process of removing at least a portion of the organic solvent from the cleaning waste liquid is performed. In a case in which the at least a portion of the organic solvent is removed from the cleaning waste liquid, since reactivity between water and the binder is increased because a content of the organic solvent is reduced, an amount of the water used during precipitation of the binder may be reduced. Also, as a result, a content of the water and the organic solvent in the second treatment solution in the fourth step to be described later may be reduced, an amount of energy consumed for distilling the water and the organic solvent during fractional distillation may be reduced.

The removal of the organic solvent, for example, may be performed by a method of removing a supernatant of the cleaning waste liquid or a method of selectively removing the organic solvent through filtering.

In a case in which the positive electrode active material and the binder are present in the form of precipitates in the cleaning waste liquid, the organic solvent may be removed by a simple method of removing the supernatant.

In a case in which the positive electrode active material and the binder are present in the state of being suspended in the cleaning waste liquid, only the organic solvent, excluding the positive electrode active material and the binder as solids, may be selectively removed through a filter.

The pretreatment step is preferably performed such that a solid content in the cleaning waste liquid after the removing of the organic solvent is in a range of 40 wt% to 95 wt%, preferably 60 wt% to 95 wt%, and more preferably 80 wt% to 95 wt%. When an amount of the organic solvent removed satisfies the above range, the amount of the water required for the precipitation of the binder may be effectively reduced.

If the amount of the organic solvent removed is excessively small, the amount of the water required for the precipitation of the binder increases, and, as a result, an amount of energy consumed during purification of the organic solvent in a subsequent process is increased, and if the amount of the organic solvent removed is excessively large, a problem may occur in which separation of the binder does not occur smoothly even if water is added in a subsequent process.

### (2) First Step: Binder Precipitation Step

Next, the binder is precipitated by adding water to the cleaning waste liquid from which the portion of the organic solvent has been removed.

If water is added to the cleaning waste liquid, the binder, such as PVDF and PVDF-co-HFP, dissolved in the organic solvent precipitates in a solid state while reacting with the water and crystallizing.

In this case, it is desirable that the water is added in an amount of 0.5 times to 50 times, preferably 0.5 times to 10 times, and more preferably 0.5 times to 2 times a total volume of the cleaning waste liquid. In a case in which the amount of the water added satisfies the above range, the precipitation of the binder in the cleaning waste liquid occurs smoothly. If the amount of the water added is excessively small, an amount of the binder, which is not precipitated but remains dissolved in the cleaning waste liquid, increases, and if the amount of the water added is excessively large, a lot of energy may be consumed to purify the organic solvent in the fourth step to be described later.

### (3) Second Step: Binder Separation Step

If the binder dissolved in the cleaning waste liquid is precipitated through the first step, the precipitated binder is separated.

As described above, if the water is added to the cleaning waste liquid, the binder precipitates while it crystallizes as moisture is adsorbed at an end of the binder, wherein since the binder, such as PVDF (bulk density: 0.288 g/cc), has lower density than NMP (density: 1.03 g/cc) or the water (density: 1 g/cc) contained in the cleaning waste liquid, the precipitated binder floats on an upper surface of the cleaning waste liquid. Specifically, if the binder precipitates after the water is added to the cleaning waste liquid, it exists as white floating matter on the upper surface of the cleaning waste liquid.

Thus, the binder may be separated from the cleaning waste liquid by removing binder precipitates that float on the upper surface of the cleaning waste liquid.

The binder separation step may be performed one or more times, for example, may be performed 1 to 10 times, preferably, 1 to 5 times.

If the precipitated binder is removed as described above, the positive electrode active material, the water, and the organic solvent remain in a residual solution. The residual solution containing the positive electrode active material, the water, and the organic solvent is conveniently referred to as a first treatment solution.

### (4) Third Step: Positive Electrode Active Material Recovery Step

Next, the positive electrode active material is separated from the first treatment solution to obtain a second treatment solution containing the water and the organic solvent.

In this case, the separation of the positive electrode active material may be performed through various solid-liquid separation methods known in the art. For example, a method may be used in which a solid-phase positive electrode active material is precipitated and the positive electrode active material is then separated from the first treatment solution through gravity separation, or a method may be used in which only liquid-phase water and organic solvent are selectively discharged from the first treatment solution through filtering, but the present invention is not limited thereto.

If necessary, after the third step, a post-treatment process, such as washing, drying, and removing impurities (purification), may be additionally performed on the positive electrode active material that is separated from the first treatment solution.

The washing is to remove impurities on a surface of the positive electrode active material, wherein the washing may be performed according to a washing method of the positive electrode active material which is generally known in the art, and, for example, may be performed by adding the positive electrode active material in water and stirring it.

The drying is to remove the organic solvent and the water which remain in the positive electrode active material, wherein the drying may be performed by a method of drying the washed positive electrode active material at 80°C to 140°C, preferably, 80°C to 120°C, but is not limited thereto. The drying temperature may vary depending on air flow, degree of agitation, and partial pressure of a drying system.

The positive electrode active material obtained through the above-described post-treatment process may be recycled as a raw material of a battery or may be used to recover valuable metals through an acid treatment.

### (5) Fourth Step: Organic Solvent Separation Step

Next, the water is removed from the second treatment solution obtained in the third step, and the organic solvent is recovered. This step, for example, may be performed by fractional distillation of the second treatment solution. Since the water and the organic solvent have different boiling points, the water and the organic solvent may be effectively separated through fractional distillation, and a purified organic solvent may be recovered by cooling the distilled organic solvent. The recovered organic solvent may be reused in the first step. In a case in which the organic solvent is recycled as described above, since an amount of the organic solvent consumed may be reduced, processing costs may be reduced.

## Claims

1. A method of treating a cleaning waste liquid, the method comprising:
a pretreatment step of removing a portion of an organic solvent from a cleaning waste liquid containing a positive electrode active material, a binder, and the organic solvent;
a first step of precipitating the binder by adding water to the cleaning waste liquid from which the portion of the organic solvent has been removed;
a second step of separating the precipitated binder to obtain a first treatment solution containing the positive electrode active material, the water, and the organic solvent;
a third step of separating the positive electrode active material from the first treatment solution to obtain a second treatment solution containing the water and the organic solvent; and
a fourth step of removing the water from the second treatment solution and recovering the organic solvent.

2. The method of claim 1, wherein the cleaning waste liquid is a waste liquid generated after cleaning a positive electrode material mixer.

3. The method of claim 1, wherein the organic solvent is N-methylpyrrolidone.

4. The method of claim 1, wherein the pretreatment step is performed such that a solid content in the cleaning waste liquid after the removing of the organic solvent is in a range of 40 wt% to 95 wt%.

5. The method of claim 1, wherein, in the first step, the water is added in an amount of 0.5 times to 50 times a total volume of the cleaning waste liquid.

6. The method of claim 1, wherein the second step is performed by a method of removing binder precipitates that float on an upper surface of the cleaning waste liquid.

7. The method of claim 1, wherein, in the third step, the separating of the positive electrode active material from the first treatment solution is performed by a method of precipitating the positive electrode active material in the first treatment solution and performing gravity separation.

8. The method of claim 1, wherein, in the third step, the separating of the positive electrode active material from the first treatment solution is performed by filtering the first treatment solution.

9. The method of claim 1, further comprising a step of washing and drying the positive electrode active material separated from the first treatment solution, after the third step.

10. The method of claim 1, wherein the fourth step is performed by fractional distillation of the second treatment solution.
